# EUROPEAN PATENT SPECIFICATION

(11) **EP 3 086 980 B1**
(45) Date of publication and mention of the grant of the patent: **04.09.2019**
(21) Application number: 14825238.0
(22) Date of filing: 22.12.2014
(51) Int. Cl.: B60R 7/04

(54) **FLEXIBLE INTERIOR TRIM COMPONENT HAVING A DEPLOYABLE RETAINING FEATURE**
FLEXIBLE INNENAUSSTATTUNGSKOMPONENTE MIT AUSFAHRBARER HALTEVORRICHTUNG
COMPOSANT SOUPLE DE GARNITURE INTÉRIEURE PRÉSENTANT UNE CARACTÉRISTIQUE DE RETENUE DÉPLOYABLE

(30) Priority: 23.12.2013 US 201361920341 P
(43) Date of publication of application: 02.11.2016
(73) Proprietor: Shanghai Yanfeng Jinqiao Automotive Trim Systems Co. Ltd., Shanghai 201206 (CN)
(72) Inventor: HIPSHIER, Jason M., Hudsonville, Michigan 49426 (US); RANE, Nikhil Shashikant, Holland, Michigan 49424 (US); VANDERTOL, Alex D., Grandville, Michigan 49418 (US); NEWKIRK, Tyler James, Grand Rapids, Michigan 49505 (US)
(74) Representative: Trinks, Ole
(86) International application number: PCT/US2014/071940
(87) International publication number: WO 2015/100254

(56) References cited:
- US-A- 6 059 243
- US-A1- 2003 137 158
- US-A1- 2009 072 568
- US-A1- 2011 049 157
- US-B1- 8 579 348

## Description

### CROSS REFERENCE TO RELATED APPLICATIONS

### BACKGROUND

The invention relates generally to vehicle interior trim components, and more specifically, to a flexible interior trim component having a deployable retaining feature.

Vehicle storage compartments may be positioned throughout an interior of a vehicle to store cargo and other small items. For example, an overhead console may include a storage compartment suitable for storing sunglasses, driving glasses, or other items. Other storage compartments may be located within a center console, an armrest, seats, door panels, or other areas of the vehicle interior. Certain storage compartments include a door configured to secure the contents of the storage compartment and/or to hide the contents from view.

While a variety of door configurations may be employed, tambour doors are generally well-suited for storage compartments having curved openings. Typical tambour doors include a series of interlocked parallel ribs or segments that may rotate with respect to one another. In this manner, the tambour door may flex in a direction perpendicular to the orientation of the parallel segments. Such a configuration may enable the tambour door to match the contours of the curved storage compartment opening, thereby facilitating movement of the tambour door with respect to the storage compartment opening. Unfortunately, if an object (e.g., business card, coin, cell phone, etc.) is placed on the tambour door, the object may fall into an internal structure of the storage compartment during movement of the vehicle and/or during movement of the tambour door (e.g., while transitioning the tambour door from a covering position to a stowed position). Removal of the object from the internal structure (e.g., via disassembly of the storage compartment) may be an expensive and time-consuming process. The document US 8 579 348 B discloses an interior component according to the tpreamble of claim 1.

### BRIEF DESCRIPTION OF THE INVENTION

The present disclosure relates to an interior trim component including the technical features of claim 1.

### DRAWINGS

FIG. 1 is a perspective view of an embodiment of a vehicle that may include one or more storage compartments and one or more flexible tambour doors;
FIG. 2 is a perspective view of an embodiment of an interior of the vehicle of FIG. 1, including a center console with a tambour door in a covering position;
FIG. 3 is a perspective view of an embodiment of an interior of the vehicle of FIG. 1, including a center console with a tambour door in a stowed position;
FIG. 4 is a perspective view of an embodiment of a center console with a tambour door in a stowed position;
FIG. 5 is a cross-sectional side view of the center console of FIG. 3 with the tambour door in the stowed position;
FIG. 6 is a side view of an embodiment of a flexible tambour door in a covering position;
FIG. 7 is a side view of an embodiment of a flexible tambour door transitioning between a covering position and a stowed position.
FIG. 8 is a side view of an embodiment of a flexible tambour in a stowed position.
FIG. 9 is a side view of an embodiment of a deployable retaining feature of a flexible tambour door.

### DETAILED DESCRIPTION

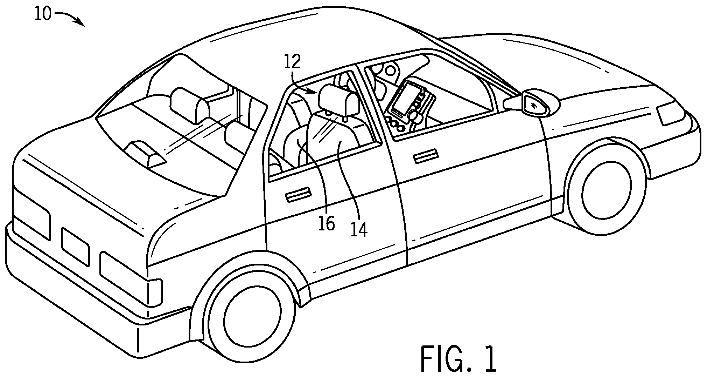

FIG. 1 is a perspective view of an exemplary vehicle 10 with an interior 12 having seats 14 and a center console 16. As discussed in detail below, the center console 16 and/or other areas within the interior 12 may include a flexible interior trim component, such as a flexible door enclosing one or more storage compartments. For example, certain storage compartments may employ a flexible tambour door having multiple substantially parallel ribs. The parallel ribs may be configured to engage a track, thereby facilitating movement of the tambour door along an opening of the storage compartment. The tambour door may also include a substrate having a rear surface facing an interior of the storage compartment, and a show surface (e.g., formed from an integral outer skin) facing the interior 12 of the vehicle 10. Alternatively, an outer surface of the substrate may face the interior 12 of the vehicle 10 and may be wrapped with a cover layer to form the show surface of the flexible tambour door described herein. The rear surface may be coupled to the substantially parallel ribs such that the tambour door may flex in a direction perpendicular to the orientation of the substantially parallel ribs. Such a configuration may enable the tambour door to match the contours of a curved storage compartment opening and curved tracks, thereby facilitating movement of the tambour door with respect to the storage compartment opening. It should be noted that, in other embodiments, the tambour door may include a substrate that is not configured to flex. In other words, in some embodiments, the cover layer or outer surface of the substrate is rigid, faces the interior 12 of the vehicle 10, and is coupled to the substantially parallel ribs. Accordingly, the tambour door may travel linearly along linear tracks.

According to the present invention, the tambour door includes a deployable retaining feature configured to extend upwardly from the outer surface (e.g., the show surface) of the tambour door when the deployable retaining feature is in an open or deployed position. The deployable retaining feature is configured to be in the deployed position while the tambour door is in a covering position over a storage compartment. With the tambour door in the covering position and the deployable retaining feature in the open position (e.g., deployed position), the deployable retaining feature is configured to engage an object (e.g., business card, coin, cell phone, etc.) adjacent to the outer surface of the tambour door to block movement of the object relative to the tambour door. Additionally, the deployable retaining feature is configured to enter a closed position while the tambour door transitions from the covering position over a storage compartment through an opening in the center console to a stowed position in a door stowage area. During the transition of the tambour door between the covering position and the stowed position (e.g., as the tambour door approaches and enters the opening), the deployable retaining feature contacts a stationary surface or lip of the console 16 (e.g., above the opening) above the substrate of the tambour door, thereby driving the deployable retaining feature toward the closed position and enabling the tambour door to enter a door stowage area (e.g., a stowed position in the console). While in the closed position, the deployable retaining feature may be substantially flush with the outer surface of the tambour door. As the tambour door enters the door stowage area, the object (e.g., business card, coin, cell phone, etc.) may also contact the lip of the console 16 such that the object does not move relative to the lip and does not fall (e.g., follow the tambour door) into the door stowage area. Additional features of the tambour door with the deployable retaining feature are discussed in detail below.

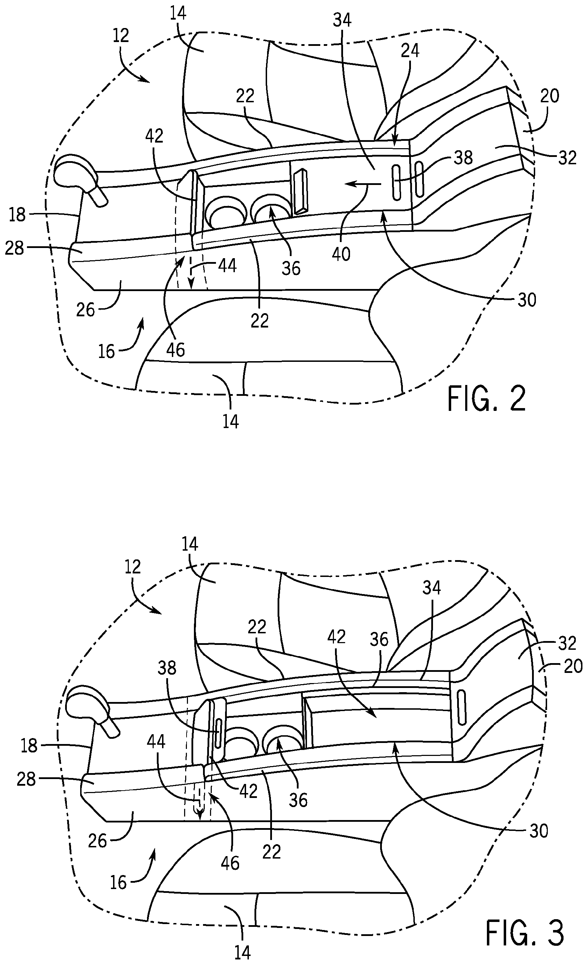

FIG. 2 is a perspective view of an exemplary center console 16 and a portion of the interior 12 of the vehicle 10 of FIG. 1. As discussed in detail below, the center console 16 may include a storage compartment enclosed by a flexible tambour door. As illustrated, the console 16 is coupled to a floor of the vehicle interior 12 between a driver seat 14 and a passenger seat 14. In the present configuration, the console 16 is configured to provide one or more storage areas (e.g., storage compartment(s) and/or cup holder compartment(s)) and an armrest for an occupant of one or both seats 14. The illustrated console 16 is curvilinear, having a front wall 18, a back wall 20, two opposed and generally symmetrical side walls 22, and a curvilinear top surface 24. It should be noted that the curvilinear top surface 24 may include one or more tambour doors, and that a number of storage compartments may be located underneath the top surface 24 and throughout the center console 16 in general.

The console 16 also includes two side panels 26, which form the main body of the console 16. In the present configuration, each side panel 26 provides one of the side walls 22 of the console 16 and portions of the rear wall 20, the front wall 18, and the top surface 24. As illustrated, the side walls 22 include a compound-curved upper contour having both convex and concave portions, thereby transitioning between the raised rear wall 20 and the lower front wall 18. The top edges 28 of the side panels 26 form part of the curved top surface 24. The top surface 24 may include one or more openings 30 that enable an occupant to access an interior of the console 16 (e.g., a storage compartment). In certain configurations, as described above, the console 16 includes a rear door (e.g., a rear tambour door 32) forming a portion of the rear wall 20 and/or the top surface 24.

In the present configuration, the console 16 includes a door 34 (e.g., a tambour door) configured to transition between one or more covering positions over one or more storage compartments, as illustrated, and a stowed position, as described in detail below. The door 34 includes a handle 38 that enables an occupant to slide the door 34 between the covering position(s) and the stowed position. In the illustrated embodiment, the door 34 is in a covering position over one or more storage compartments. However, the door 34 may also be in a covering position over cup holder compartment 36, which may also be considered a storage compartment. As described in detail below, sliding the door 34 in direction 40 toward the stowed position exposes an interior of one or more storage compartments located within the console 16. By sliding the door 34 in direction 40 and through an opening 42, the door 34 may be moved generally downward in direction 44 into a door stowage area 46 below or internal to the console 16.

In certain configurations, the door 34 is a tambour door having a series of substantially parallel ribs coupled to a flexible substrate. The ribs are configured to engage a track within the side walls 22, and the flexible substrate enables the door 34 to flex and to accommodate the contours of the opening 30 (e.g., such that the door 34 may move in direction 40 and direction 44, as well as a curvilinear path between the two). The flexible substrate also enables the door 34 to serve as an armrest for the vehicle occupants, thereby reducing the space associated with providing a separate door 34 and armrest.

While the present tambour door 34 is described herein with reference to the center console 16, it should be appreciated that alternative embodiments may employ similar tambour doors positioned throughout the interior 12 of the vehicle 10. For example, a storage compartment located within an overhead console, door panel, instrument panel, or other region of the interior 12 may include a flexible tambour door. Furthermore, other flexible interior trim components, in addition to the door 34 described herein, may include similar parallel ribs coupled to a substrate as previously described.

FIG. 3 is a perspective view of the center console 16 of FIG. 2 with the flexible tambour door 34 in a stowed position. The side walls 22, as previously described, may include rails or tracks (e.g., a multi-track system) configured to facilitate movement of the door 34 in directions 40 and 44, as illustrated, and any suitable direction corresponding to the direction of the rails or tracks. For example, the rails or tracks may define a curved path between direction 40 and direction 44 to facilitate movement of the door 34 from the covered position over the cup holder compartment 36, as previously described, to the stowed position in the door stowage area 46, as illustrated.

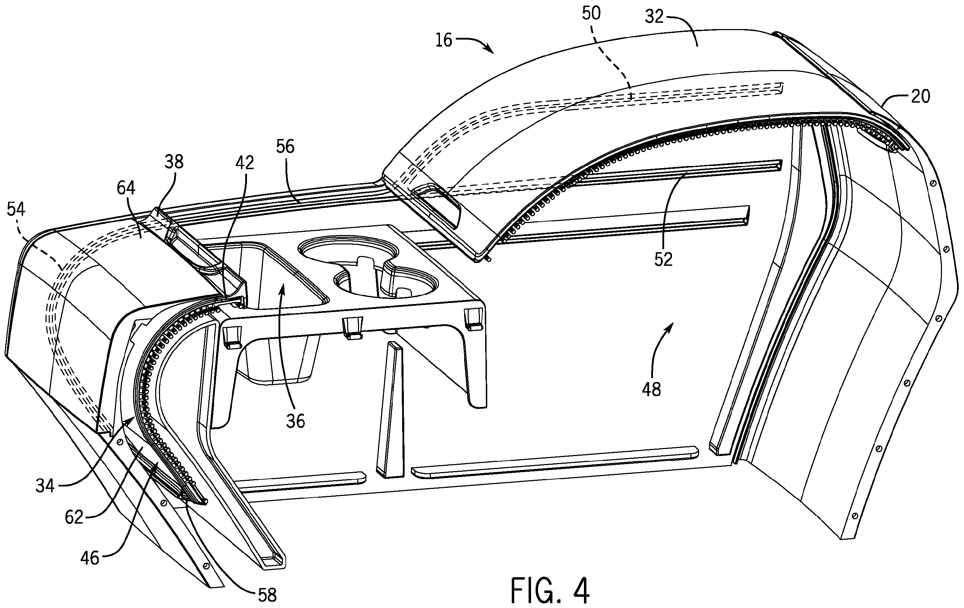

FIG. 4 is a perspective view of an embodiment of the center console 16 with a flexible tambour door 34 in the stowed position in the door stowage area 46. The center console 16 in the illustrated embodiment includes a storage compartment 48 in addition to the cup holder compartment 36. The tambour door 34 is configured to slide into a top track 50 of the storage compartment 48 or a bottom track 52 of the storage compartment 48, in which the top track 50 and the bottom track 52 are part of a multi-track system. Accordingly, the storage compartment 48 may be partitioned into multiple storage compartments (e.g., two storage volumes), and the multiple storage compartments may establish different sized storage volumes based on the position of the tambour door 34 (e.g., on the bottom track 52 or on the top track 50). In other words, a driver or passenger may move the tambour door 34 onto the bottom track 52 or the top track 50 based on the desired storage compartment size. As previously described, the tambour door 34 may include a flexible substrate covering parallel ribs, and the parallel ribs may engage the top track 50 or the bottom track 52. Thus, the structure of the tambour door 34 described herein enables the tambour door 34 to flex and accommodate contours of the top track 50 and/or the bottom track 52.

Additionally, the tambour door 34 is configured to cover the cup holder compartment 36. Or, as in the illustrated embodiment, the tambour door 34 may be stowed in a door stowage area 46. For example, the tambour door 34 may be transitioned via the handle 38 through the opening 42 into the door stowage area. The structure of the tambour door 34 enables the tambour door 34 to flex and accommodate contours of a stowage track 54. The stowage track 54 may define a portion of the multi-track system used for translating the tambour door 34 between a covered position and a stowed position. In addition to the stowage track 54 portion, the multi-track system includes a flat portion 56 over the cup holder compartment 36, as well as the bottom track 52 and the top track 50, as previously described. It should be noted that the console 16 in the illustrated embodiment includes an exemplary multi-track system, but other singular or multi-track systems may be employed in alternative embodiments. For example, the storage compartment 48 may include the top track 50, the bottom track 52, and a middle track, such that the storage compartment 48 may be partitioned into a greater variety of storage volumes. Or, only one track may partition the storage compartment 48, such as the bottom track 52. It should be appreciated that the multi-track system discussed above is only an exemplary embodiment used in the console 16 and that variations of or changes to the multi-track system may occur to one of ordinary skill in the art, and that such variations or changes would not be considered as materially departing from the present disclosure.

As described above, the tambour door 34 may be in a rearward position or a covering position in or over a portion of the storage compartment 48 or over the cup holder compartment 36. Or, the tambour door may be in a stowed position in the door stowage area 46. Additionally, object(s) (e.g., business card, coin, cell phone, etc.) may be placed by a driver or passenger on the tambour door 34 while the tambour door 34 is accessible to a vehicle occupant (e.g., while the tambour door 34 is not in the stowed position). It may be desirable for the object(s) to remain on the tambour door 34 when the tambour door 34 is stationary and/or when the tambour door 34 is being transitioned between portions of the multi-track system by the driver or passenger (e.g., from one of the covering positions to the stowed position). For example, during a hard brake of the vehicle 10, objects on the tambour door 34 may slide across the tambour door 34. Accordingly, the tambour door 34 includes a deployable retaining feature 58, as previously described, to engage the object(s) (e.g., a business card, a coin, a cell phone, etc.) and to block the object(s) from falling off the tambour door 34 (e.g., into the cup holder compartment 36, the door stowage area 46, and/or the storage compartment 48). For example, while the tambour door 34 is in the rearward position (e.g., on top track 50 or bottom track 52) over the storage compartment 48, the deployable retaining feature 58 is deployed (e.g., extended or in an open position) such that objects on the tambour door 34 may contact the deployable retaining feature 58. Thus, the deployable retaining feature 58 may block objects on the tambour door 34 from falling into the storage compartment 48. Further, while the tambour door is in the covering position (e.g., on flat portion 56) over the cup holder compartment 36, the deployable retaining feature 58 is deployed (e.g., extended or in the open position) such that objects on the tambour door 34 may contact the deployable retaining feature 58. Thus, the deployable retaining feature 58 may block objects on the tambour door 34 from falling into the cup holder compartment 36. Further still, as the tambour door 34 transitions from the flat portion 56 of the multi-track system to stowage track 54 (e.g., in the door stowage area 46), the deployable retaining feature 58 interfaces with components proximate to the opening 42 to block objects from falling into the door stowage area 46, in accordance with the description below.

As illustrated, the deployable retaining feature 58 extends upwardly from and at an angle to an outer surface 62 of the tambour door 34, as previously described. The deployable retaining feature 58 is configured to contact a stationary lip 64 of the console 16 while transitioning from one of the covering positions to the stowed position in the door stowage area 46. When the deployable retaining feature 58 contacts the stationary lip 64, the deployable retaining feature 58 is driven toward a closed position (e.g., flush with the outer surface 62 of the tambour door 24) to enable the tambour door 34 to move through the opening 42 in the console 16 and into the door stowage area 46. Once the deployable retaining feature 58 moves beyond the lip 64 of the console 16, the deployable retaining feature 58 may move back to the open, or deployed, position.

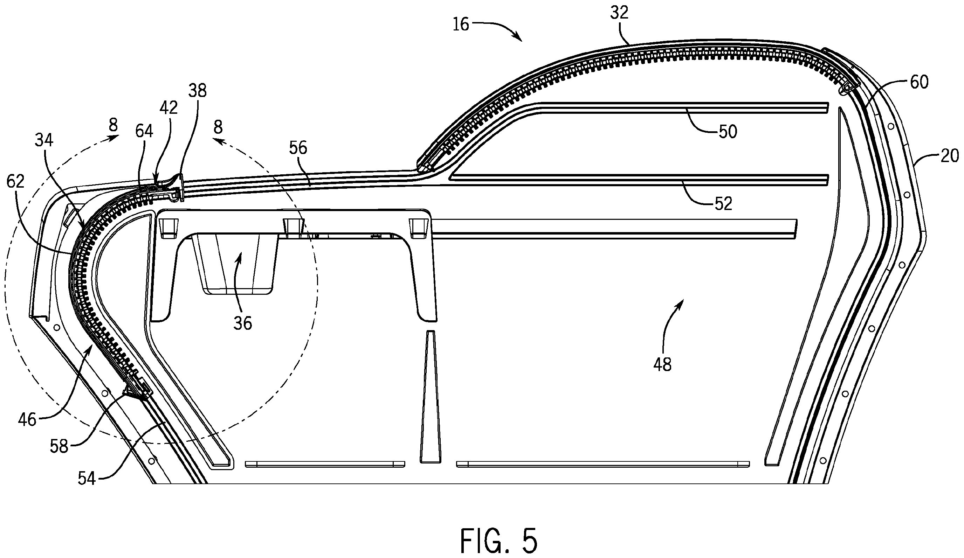

FIG. 5 is a cross sectional side view of an embodiment of the center console 16 as described above. The center console 16 includes the exemplary multi-track system for the tambour door 34, in which the multi-track system includes the top track 50, the bottom track 52, the flat portion 56, and the stowage track 54. In the illustrated embodiment, the tambour door 34 is in the stowed position in the door stowage area 46. Additionally, the rear tambour door 32 is positioned on an upper track 60, in which the upper track 60 may be part of another track system (e.g., a separate track from the multi-track system described herein) and the upper track 60 curves around an outside of the storage compartment 48.

The tambour door 34 of the multi-track system may be transitioned via the handle 38 from the stowed position, as illustrated and previously described, to a covering position over the cup holder compartment 36 (e.g., onto the flat portion 56 of the multi-track system). The tambour door 34 may also be transitioned via the handle 38 from the covering position over the cup holder compartment 36 onto the top track 50 or the bottom track 52 (e.g., into a covering position inside and/or over a portion of the storage compartment 48). As such, the tambour door 34 may serve as a partition to generate multiple storage volumes in the storage compartment 48 (e.g., two storage volumes).

As illustrated, the tambour door 34 is stowed in a door stowage area 46. While in the door stowage area 46, the deployable retaining feature 58 may be in the deployed, or open, position. However, the outer surface 62 of the tambour door 34 may remain in contact with the lip 64 of the console 16. Accordingly, the door stowage area 46 may be sealed from the cup holder compartment 36, the other storage compartment(s) of the console 16, and the interior 12 of the vehicle 10 in general. Thus, objects may be blocked from falling into the door stowage area 46.

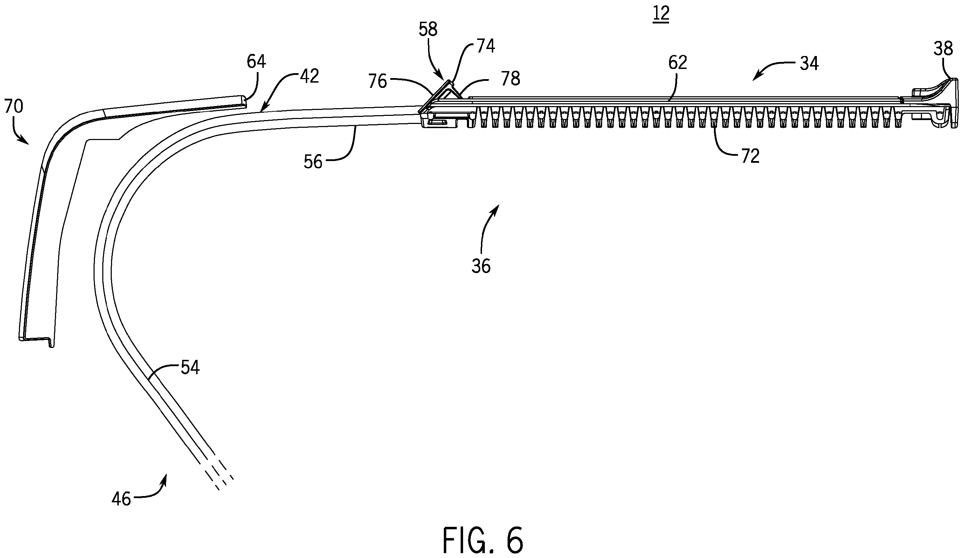

FIG. 6 is a side view of an embodiment of the tambour door 34 in a covering position. The tambour door 34 is shown only with a top structure 70 of a portion of the console 16 (e.g., of the stowage area 46) for clarity. The tambour door 34 in the illustrated embodiment may be in a covering position over a storage compartment (e.g., the cup holder compartment 36, as previously described). The tambour door 34 includes parallel ribs 72, which may engage a track (e.g., the flat portion 56 of the multi-track system, as previously described). The parallel ribs 72 are substantially covered by a flexible substrate having an outer surface 62 that faces an interior 12 of the vehicle 10. The flexible substrate enables the tambour door 34 to flex as the tambour door 32 moves along the portions of the multi-track system.

The tambour door 32 in the illustrated embodiment includes the deployable retaining feature 58 as previously described. While the tambour door 32 is in the covering position over the cup holder compartment 36, the deployable retaining feature 58 is in an open or deployed position and may engage one or more objects (e.g., business card, coin, cell phone, etc.). As illustrated, the deployable retaining feature 58 includes a retaining lip 74, an outer surface 76, and a retaining surface 78. The outer surface 76 faces away from an object (e.g., business card, coin, cell phone, etc.) on the tambour door 34, and the retaining surface 78 is configured to engage the object. The retaining lip 74 extends from the outer surface 76 of the deployable retaining feature 58, such that the retaining lip 74 and the retaining surface 78 may both engage an object on the outer surface 62 of the tambour door 34. In other words, depending on the size of the object, the retaining lip 74 may extend over the object and/or the outer surface 62 of the tambour door 34 while the deployable retaining feature 58 is in the open or deployed position.

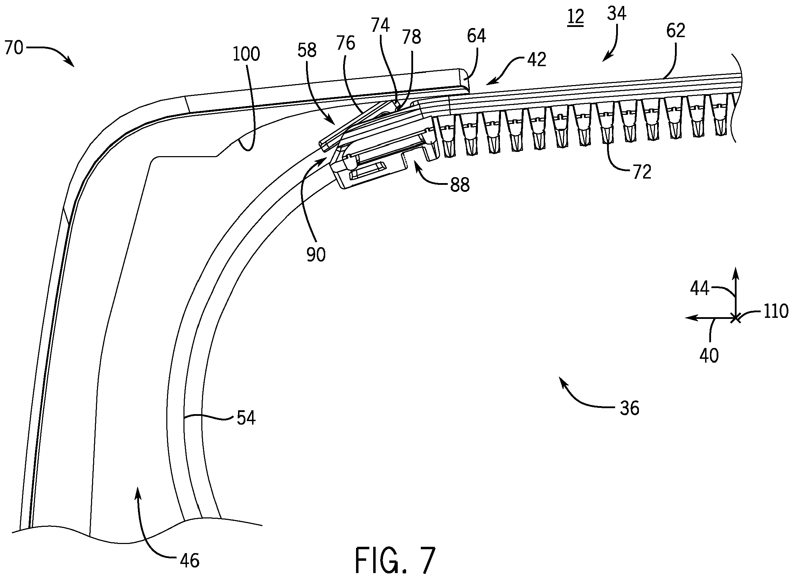

FIG. 7 is a side view an embodiment of the tambour door 34, which is transitioning from the covering position to the stowed relative to the top structure 70 of a portion of the console 16 (e.g., of the door stowage area 46). As the tambour door 34 slides along the multi-track system (e.g., flat portion 56 and/or storage track 54) toward and through the opening 42, the deployable retaining feature 58 comes into contact with the stationary lip 64 of the top structure 70 (and an inner surface of the top structure 70, as described below) of the door stowage area 46 of the console 16. In particular, in the illustrated embodiment, the outer surface 76 of the deployable retaining feature 58 contacts the stationary lip 64 of the top structure 70. As the tambour door 34 continues to move in direction 40, the retaining surface 78 of the deployable retaining feature 58 moves into an opening 88 of the deployable retaining feature 58 or, in another embodiment, an opening of the outer surface 62 of the tambour door 34. As such, the outer surface 76, the retaining lip 74, and the retaining surface 78 rotate about a hinge point 90 of the deployable retaining feature 58 to the closed position. The hinge point 90 is part of a hinge assembly that may include a compression spring, a coil spring, or some other type of spring or biasing mechanism configured to urge the deployable retaining feature 58 toward the open position.

Additionally, the retaining lip 74 of the deployable retaining feature 58 may urge an object (e.g., business card, coin, cell phone, etc.) on the tambour door 34 (as previously described) away from the opening 42 of the door stowage area 46 as the deployable retaining feature 58 transitions to the closed position. Further, once the deployable retaining feature 58 passes the stationary lip 64 in direction 40, the object itself may contact the stationary lip 64 as the tambour door 34 moves toward the door stowage area 46. Accordingly, the object may be blocked from falling into the door stowage area 46, and may remain in contact with the stationary lip 64 of the top structure 70 as the tambour door 34 moves into the stowed position.

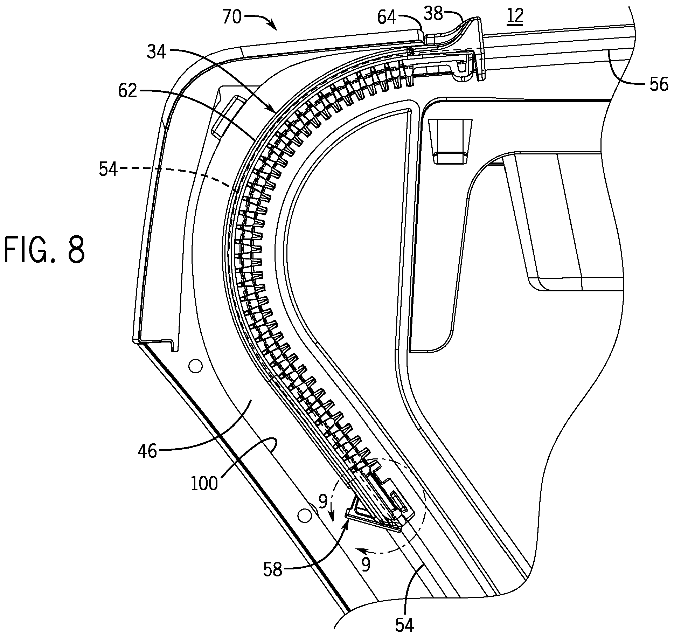

FIG. 8 is a side view of an embodiment of the tambour door 34 in the stowed position of the door stowage area 46. In this embodiment, the tambour door 34 is stowed on the stowage track 54 of the multi-track system. The deployable retaining feature 58 is in a deployed or open position, as illustrated. In another embodiment, the outer surface 76 of the deployable retaining feature 58 may be in contact with an inner surface 100 of the top structure 70 of the door stowage area 46, in which case the deployable retaining feature 58 may be in a closed position as described with respect to FIG. 7.

In the illustrated embodiment, the stowage track 54 is configured to route the tambour door 34 away from the inner surface 100 of the top structure 70. However, the outer surface 76 of the deployable retaining feature 58 contacts the inner surface 100 of the stowage area 46 at one point (e.g., after just passing the stationary lip 64), and moves away from the inner surface 100 of the stowage area 46 once the tambour door 34 moves farther into the stowage area 46. Accordingly, the deployable retaining feature 58 may be in the deployed position, as previously described while the tambour door 34 is in the stowed position. Adjacent to the opening 42, however, the tambour door 34 remains in contact with or at a narrow distance from the stationary lip 64 of the top surface 70. The narrow distance, for example, is substantially less than the total protrusion of the outer surface 76 of the deployable retaining feature 58 when the deployable retaining feature 58 is deployed. Additionally, in the illustrated embodiment, the handle 38 of the tambour door 34 extends upwardly from the outer surface 62 of the tambour door 34 such that the tambour door 34 is blocked from extending farther into the door stowage area 46 via contact between the handle 38 and the lip 64. Accordingly, the tambour door 34 may be moved from the stowed position in the door stowage area 46 to one of the covering positions by accessing the handle 38 of the tambour door 34 from the interior 12 of the vehicle 10. In other words, in the illustrated embodiment, the driver and/or passenger may move the tambour door 34 into a covering position over the cup holder compartment 36 or storage compartment 48 without reaching through the opening 42 into the door stowage area 46 to retrieve the tambour door 34.

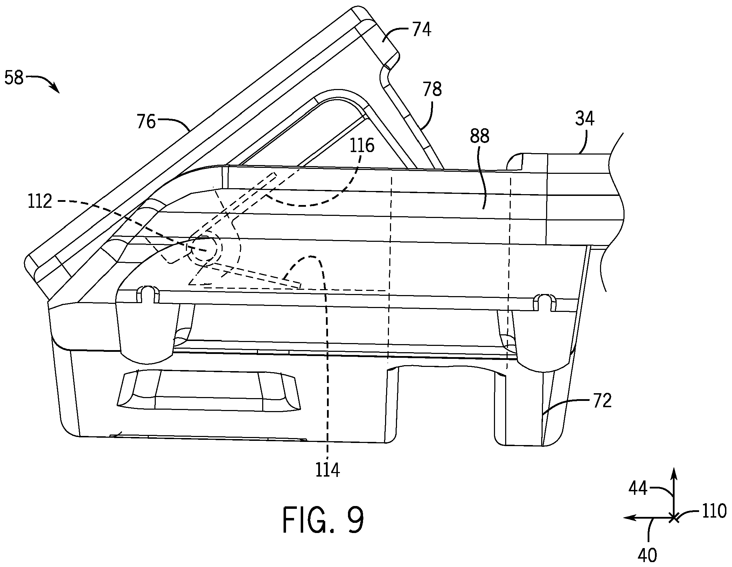

FIG. 9 is a side view of an embodiment of the deployable retaining feature 58 for use on the tambour door 34. In the illustrated embodiment, the opening 88 is configured to receive the retaining surface 78 as the deployable retaining feature 58 moves from the deployed position to the closed position. When the deployable retaining feature 58 is in the closed position or approaching the closed position, the outer surface 76 of the deployable retaining feature 58 may be substantially flush, or approaching a substantially flush position, with the outer surface 62 of the tambour door 34. However, in another embodiment, the outer surface 76 of the deployable retaining feature 58 may be offset from the outer surface 62 of the tambour door 34 in direction 40 and/or in direction 44 when the deployable retaining feature 58 is in the closed position (e.g., completely closed). In other words, the outer surface 76 may be slightly above or slightly below the outer surface 62, or there may be a gap between the retaining lip 74 and outer surface 62, or a combination of both. It should also be noted that the outer surface 76 of the deployable retaining feature 58 may extend along an entire width of the deployable tambour door 34 (e.g., in direction 110), or the outer surface 76 may extend over only a portion (e.g., central portion) of the tambour door 34. Additionally, the outer surface 76 may be continuous (e.g., continuously flat) over a length of the tambour door 34, or the outer surface 76 may be combed (e.g., partitioned into individual components, or fingers). Further, the outer surface 76 may be smooth or textured, and the outer surface 76 may be made of or covered by the same material as a main portion of the outer surface 62 of the tambour door 34, or it may be made of or covered by a different material.

By texturing the retaining surface 78, the outer surface 76, and/or the retaining lip 74 of the deployable retaining feature 58, engagement with an object on the outer surface 62 of the tambour door 34 may be enhanced. In other words, a textured finish of the outer surface 76, retaining surface 78, and/or retaining lip 74 may increase the likelihood that certain objects (e.g., a cell phone) are blocked from falling into a stowage area 46 of the console 16. However, it may be desirable to include a smooth outer surface 76, retaining surface 78, and/or retaining lip 74 in certain embodiments.

Further, in some embodiments, a continuous outer surface 76, retaining surface 78, and/or retaining lip 74 may be desired, such that smaller objects (e.g., coins) are blocked from falling from the tambour door 34. In other embodiments, a combed outer surface 76, retaining surface 78, and/or retaining lip 74 may be desired.

As shown in the illustrated embodiment, the deployable retaining feature 58 is configured to move from the open position to the closed position via a pivoting feature 112 (e.g., a hinge mechanism). In the illustrated embodiment, the pivoting feature 112 includes a spring 114 (e.g., a coil spring). The spring 114 exerts a spring force on a bottom surface 116 of the deployable retaining feature 58, which urges the deployable retaining feature 58 toward the deployed position. When the outer surface 76 of the deployable retaining feature 58 contacts the stationary lip 64 of the outer structure 70 of the console 16, the stationary lip 64 exerts a force on the outer surface 76, which may exceed the spring force exerted on the bottom surface 116 of the deployable retaining feature 58 by the spring 114. Accordingly, the deployable retaining feature 58 rotates about the pivoting feature 112 into a closed position, until the outer surface 76 is no longer in contact with the stationary lip 64 or the inner surface 100 of the top structure 70. It should be noted that the spring 114 may be a coil spring, a compression spring, or some other type of spring or biasing mechanism. In one embodiment, the spring 114 may be designed as a separate part of the tambour door 34 assembly. In some embodiments, necessary features of the spring 114 may be integrated into the material of the outer surface 76, retaining surface 78, retaining lip 74, or any other portion or part of the tambour door 34.

According to the invention, the deployable retaining feature 58 is configured to translate up and down relative to the stationary lip 64. In other words, when the deployable retaining feature 58 is in a covering position over, for example, the cup holder compartment 36, the deployable retaining feature 58 is in an open position and extending from the outer surface 62 of the tambour door 34. When the deployable retaining feature 58 contacts the stationary lip 64, the deployable retaining feature 58 translates downwardly such that the tambour door 34 can fit through the opening 42 into the door stowage area 46. For example, the deployable retaining feature 58 may translate downwardly due to a tapered surface (e.g., the outer surface 62) of the deployable retaining feature 58 contacting the stationary lip 64, such that a portion of a force translated from the stationary lip 64 against the tapered surface (e.g., the outer surface 62) of the deployable retaining feature 58 is directed downwardly. The deployable retaining feature 58 may then be pushed downwardly into the opening 88, such that the tambour door 34 fits through the opening 42.

## Claims

1. A console (16) for a vehicle interior (12), comprising:
- at least one storage compartment (48);
- a stowage (46) positioned proximate to the at least one storage compartment (48); and
- an interior trim component (34) configured to transition between a covering position over the at least one storage compartment (48) and a stowed position in the stowage area (46), the interior trim component (34) comprising:
∘ a plurality of substantially parallel ribs (72), each configured to engage a track (50, 52, 54, 60) to facilitate movement of the interior trim component along the track (50, 52, 54, 60);
∘ a substrate having an outer surface (62) and a rear surface, wherein the outer surface (62) is configured to face an interior (12) of the vehicle, and the rear surface is coupled to the plurality of substantially parallel ribs (72); **characterised in that** the interior trim component (34) comprises
∘ a deployable retaining feature (58) coupled to the substrate, wherein the deployable retaining feature (58) is configured to extend upwardly from the outer surface (62) while the deployable retaining feature (58) is in an open position to engage an object adjacent to the outer surface (62) and to block movement of the object relative to the interior trim component, and to retract into a closed position that facilitates movement of the interior trim component relative to a proximate structure (70) of the console (16), wherein the deployable retaining feature (58) is configured to transition to the closed position upon contact with a stationary lip (64) of the proximate structure (70) of the console (16) while transitioning from a covering position to a stowed position in the stowage area (46).

2. The console (16) of Claim 1 wherein the deployable retaining feature (58) is positioned adjacent to a leading edge of the interior trim component along a direction of travel toward the proximate structure.

3. The console (16) of Claim 1 or 2 wherein the deployable retaining feature (58) comprises an outer surface facing the interior (12) of the vehicle, wherein the outer surface of the deployable retaining feature (58) is substantially flush with the outer surface (62) of the interior trim component while the deployable retaining feature (58) is in the closed position.

4. The console (16) of Claim 3 wherein a retaining lip (74) extends substantially parallel to the outer surface of the deployable retaining feature (58) beyond a retaining surface (78) of the deployable retaining feature (58), wherein the retaining surface (78) is substantially perpendicular to the outer surface of the deployable retaining feature (58).

5. The console (16) of Claim 4 wherein the retaining surface (78) of the deployable retaining feature (58) and the retaining lip (74) of the deployable retaining feature (58) are configured to engage the object on the outer surface (62) of the interior trim component.

6. The console (16) of Claim 1 wherein the deployable retaining feature (58) is configured to rotate from the open position to the closed position about a pivoting feature (112).

7. The console (16) of Claim 6 wherein the pivoting feature (112) comprises a hinge and a spring (114).

8. The console (16) of Claim 7 wherein the spring (114) comprises a coil spring or a compression spring.

## Patentansprüche

1. Konsole (16) für einen Fahrzeuginnenraum (12), die Folgendes aufweist:
- mindestens ein Aufbewahrungsfach (48);
- einen Stauraum (46), der in der Nähe des mindestens einen Aufbewahrungsfachs (48) angeordnet ist; und
- eine Innenausstattungskomponente (34), die dazu ausgebildet ist, zwischen einer Abdeckungsposition über dem mindestens einen Aufbewahrungsfach (48) und einer verstauten Position in dem Stauraum (46) überzugehen, wobei die Innenausstattungskomponente (34) Folgendes aufweist:
o eine Vielzahl von im Wesentlichen parallelen Rippen (72), die jeweils dazu ausgebildet sind, in eine Schiene (50, 52, 54, 60) einzugreifen, um die Bewegung der Innenausstattungskomponente entlang der Schiene (50, 52, 54, 60) zu erleichtern;
o ein Substrat mit einer Außenfläche (62) und einer Rückfläche, wobei die Außenfläche (62) so ausgebildet ist, dass sie einem Innenraum (12) des Fahrzeugs zugewandt ist, und die Rückfläche mit der Vielzahl von im Wesentlichen parallelen Rippen (72) verbunden ist;
**dadurch gekennzeichnet, dass** die Innenausstattungskomponente (34) Folgendes aufweist:
∘ ein entfaltbares Rückhalteelement (58), das mit dem Substrat verbunden ist, wobei das entfaltbare Rückhalteelement (58) dazu ausgebildet ist, sich von der Außenfläche (62) nach oben zu erstrecken, während sich das entfaltbare Rückhalteelement (58) in einer offenen Position befindet, um mit einem Objekt angrenzend zu der Außenfläche (62) in Eingriff zu kommen und die Bewegung des Objekts in Bezug auf die Innenausstattungskomponente zu blockieren; und dazu ausgebildet ist, sich in eine geschlossene Position zurückzuziehen, die die Bewegung der Innenausstattungskomponente bezogen auf eine benachbarte Struktur (70) der Konsole (16) erleichtert,
wobei das entfaltbare Rückhalteelement (58) dazu ausgebildet ist, bei Kontakt mit einer stationären Lippe (64) der benachbarten Struktur (70) der Konsole (16) in die geschlossene Position überzugehen, während es von einer Abdeckungsposition in eine verstaute Position im Stauraum (46) übergeht.

2. Konsole (16) nach Anspruch 1, wobei das entfaltbare Rückhalteelement (58) angrenzend an eine Vorderkante der Innenausstattungskomponente entlang einer Bewegungsrichtung in Richtung der benachbarten Struktur angeordnet ist.

3. Konsole (16) nach Anspruch 1 oder 2, wobei das entfaltbare Rückhalteelement (58) eine dem Innenraum (12) des Fahrzeugs zugewandte Außenfläche aufweist, wobei die Außenfläche des entfaltbaren Rückhalteelements (58) im Wesentlichen bündig zu der Außenfläche (62) der Innenausstattungskomponente ist, während sich das entfaltbare Rückhalteelement (58) in der geschlossenen Position befindet.

4. Konsole (16) nach Anspruch 3, wobei sich eine Haltelippe (74) im Wesentlichen parallel zu der Außenfläche des entfaltbaren Rückhalteelements (58) erstreckt, und zwar über eine Haltefläche (78) des entfaltbaren Rückhalteelements (58) hinaus, wobei die Haltefläche (78) im Wesentlichen senkrecht zu der Außenfläche des entfaltbaren Rückhalteelements (58) steht.

5. Konsole (16) nach Anspruch 4, wobei die Haltefläche (78) des entfaltbaren Rückhalteelements (58) und die Haltelippe (74) des entfaltbaren Rückhalteelements (58) dazu ausgebildet sind, in das Objekt an der Außenfläche (62) der Innenausstattungskomponente einzugreifen.

6. Konsole (16) nach Anspruch 1, wobei das entfaltbare Rückhalteelement (58) dazu ausgebildet ist, sich von der geöffneten Position in die geschlossene Position um eine Schwenkeinrichtung (112) zu drehen.

7. Konsole (16) nach Anspruch 6, wobei die Schwenkeinrichtung (112) ein Gelenk und eine Feder (114) aufweist.

8. Konsole (16) nach Anspruch 7, wobei die Feder (114) eine Schraubenfeder oder eine Druckfeder aufweist.

## Revendications

1. Console (16) pour l'intérieur d'un véhicule (12), comprenant :
- au moins un compartiment de stockage (48) ;
- un rangement (46) positionné à proximité dudit au moins un compartiment de stockage (48) ; et
- un composant d'habillage intérieur (34) configuré pour faire une transition entre une position de recouvrement par-dessus ledit au moins un compartiment de stockage (48) et une position rangée dans la zone de stockage (46),
le composant d'habillage intérieur (34) comprenant :
∘ une pluralité de nervures sensiblement parallèles (72), configurées chacune pour engager une voie (50, 52, 54, 60) pour faciliter un mouvement du composant d'habillage intérieur le long de la voie (50, 52, 54, 60) ;
∘ un substrat ayant une surface extérieure (62) et une surface arrière, dans lequel la surface extérieure (62) est configurée pour faire face vers un intérieur (12) du véhicule, et la surface arrière est couplée à la pluralité de nervures sensiblement parallèles (72) ;
**caractérisée en ce que** le composant d'habillage intérieur (34) comprend
∘ une caractéristique de retenue déployable (58) couplé au substrat, dans lequel la caractéristique de retenue déployable (58) est configurée pour s'étendre vers le haut depuis la surface extérieure (62) lorsque la caractéristique de retenue déployable (58) est dans une position ouverte pour engager un objet adjacent à la surface extérieure (62) et pour bloquer un mouvement de l'objet par rapport au composant d'habillage intérieur, et pour se rétracter jusque dans une position fermée qui facilite un mouvement du composant d'habillage intérieur par rapport à une structure proche (70) de la console (16),
dans lequel la caractéristique de retenue déployable (68) est configurée pour faire une transition vers la position fermée lors d'un contact avec une lèvre stationnaire (64) de la structure proche (70) de la console (16) lors d'une transition depuis une position de recouvrement vers une position rangée dans la zone de rangement (46).

2. Console (16) selon la revendication 1, dans laquelle la caractéristique de retenue déployable (58) est positionnée adjacente à un bord de tête du composant d'habillage intérieur le long d'une direction de déplacement vers la structure proche.

3. Console (16) selon la revendication 1 ou 2, dans laquelle la caractéristique de retenue déployable (58) comprend une surface extérieure en face de l'intérieur (12) du véhicule, dans laquelle la surface extérieure de la caractéristique de retenue déployable (58) est sensiblement en affleurement avec la surface extérieure (62) du composant d'habillage intérieur lorsque la caractéristique de retenue déployable (58) est dans la position fermée.

4. Console (16) selon la revendication 3, dans laquelle une lèvre de retenue (74) s'étend sensiblement parallèlement à la surface extérieure de la caractéristique de retenue déployable (58) au-delà d'une surface de retenue (78) de la caractéristique de retenue déployable (58), dans laquelle la surface de retenue (78) est sensiblement perpendiculaire à la surface extérieure de la caractéristique de retenue déployable (58).

5. Console (16) selon la revendication 4, dans laquelle la surface de retenue (78) de la caractéristique de retenue déployable (58) et la lèvre de retenue (74) de la caractéristique de retenue déployable (58) sont configurées pour engager l'objet sur la surface extérieure (62) du composant d'habillage intérieur.

6. Console (16) selon la revendication 1, dans laquelle la caractéristique de retenue déployable (58) est configuré pour effectuer une rotation depuis la position ouverte vers la position fermée autour d'une caractéristique de pivotement (112).

7. Console (16) selon la revendication 6, dans laquelle la caractéristique de pivotement (112) comprend une charnière et un ressort (114).

8. Console (16) selon la revendication 7, dans laquelle le ressort (114) comprend un ressort à boudin ou un ressort de compression.
